(19) **Europäisches Patentamt / European Patent Office / Office européen des brevets**

(11) **EP 4 141 060 A1**

(12) **EUROPEAN PATENT APPLICATION**

(43) Date of publication:
01.03.2023 Bulletin 2023/09

(21) Application number: 22193551.3

(22) Date of filing: 08.11.2018

(51) International Patent Classification (IPC):
C08K 3/34 (2006.01)     C08K 5/10 (2006.01)
C08K 5/14 (2006.01)     C08K 9/04 (2006.01)
C09J 167/04 (2006.01)     C08K 3/013 (2018.01)
C09J 7/35 (2018.01)     C09J 7/38 (2018.01)

(52) Cooperative Patent Classification (CPC):
(C-Sets available)
C09J 167/04; C08K 3/013; C08K 3/346;
C08K 5/10; C08K 5/14; C08K 9/04; C09J 7/38;
C09J 2400/163; C09J 2400/226; C09J 2400/283;
C09J 2467/00                              (Cont.)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 08.11.2017 GB 201718470

(62) Document number(s) of the earlier application(s) in
accordance with Art. 76 EPC:
18811447.4 / 3 707 199

(71) Applicant: The Provost, Fellows, Scholars and
other
Members of Board of Trinity College Dublin
Dublin 2 (IE)

(72) Inventors:
• REDDY CHAGANTI, Srinivasa
Co. Kildare, W23 XP80 (IE)

• MORALES-GAMEZ, Laura
Dublin, 2 (IE)
• O'CONNOR, KEVIN
Malahide, Co. Dublin (IE)
• BABU PADAMATI, Ramesh
Dublin, K78 D0A0 (IE)

(74) Representative: Purdylucey Intellectual Property
6-7 Harcourt Terrace
D02 FH73 Dublin 2 (IE)

Remarks:
This application was filed on 01-09-2022 as a
divisional application to the application mentioned
under INID code 62.

(54) **ADHESIVE FORMULATIONS**

(57) An adhesive formulation such as a hot melt adhesive or a pressure sensitive adhesive is provided comprising 5 to 98% (by weight) biodegradable substantially non-crystalline mcl-PHA. The mcl-PHA may be cured with a peroxide curing agent. The adhesive formulation may include an additional biodegradable polymer, or a non-biodegradable thermoplastic elastomer. Hot melt adhesives comprising significant amounts of biodegradable mcl-PHA, waxes, and tackifiers are also provided.

FIGURE 8

EP 4 141 060 A1

(52) Cooperative Patent Classification (CPC): (Cont.)

C-Sets
**C09J 167/04, C08K 3/346, C08L 91/06,
C08L 93/04;
C09J 167/04, C08L 23/28, C08L 91/06;
C09J 167/04, C08L 91/06, C08L 93/04**

**Description**

<u>Field of the Invention</u>

The present invention relates to adhesive formulations, in particular pressure sensitive and hot melt adhesive formulations, and composite adhesive formulations for making self-adhesive films. The invention also relates to compostable biopolymer compositions.

<u>Background to the Invention</u>

Adhesive films are used in a great number of applications and particularly for packaging all sorts of goods. The adhesive industry is continually in search of products with better performance, specific applications and more environment friendly ingredients in the formulations. Adhesives available on the market are non-biodegradable, and petroleum derivatives, thus adversely affecting the environment in both their source and their disposal. A need exists for biodegradable adhesive compositions, biobased adhesive compositions and both biobased and biodegradable adhesive compositions that provide sufficient adhesion for the intended use.

It is an object of the invention to overcome at least one of the above-referenced problems.

<u>Summary of the Invention</u>

The present invention addresses the need for biodegradable/biobased hydrophobic adhesive compositions that provide sufficient adhesion for the intended use, yet degrade later in an environmentally sound fashion, and are produced from renewable sources, thus, being wholly environmental friendly. Broadly, the invention provides for adhesive formulations and adhesive films that comprise medium chain length polyhydroxyalkanoates (hereafter "mcl-PHA"), and in particular non-crystalline mcl-PHA, produced by microbial fermentation of renewable feedstock.

According to a first aspect of the present invention, there is provided an adhesive formulation comprising 5 to 98% (by weight) substantially non-crystalline mcl-PHA.

In one embodiment, the adhesive formulation is selected for uses as a hot melt adhesive (HMA) or a pressure sensitive adhesive (PSA).

In one embodiment, the adhesive formulation comprises a curing (crosslinking) agent. In one embodiment, the curing agent is a peroxide curing agent. In one embodiment, the formulation comprises 0.1% to 5% curing agent. In one embodiment, the formulation comprises 0.5% to 3% curing agent. Preferably, the formulation comprises 3% curing agent. In one embodiment, the curing agent comprises benzoyl peroxide.

In one embodiment, the formulation comprises a nanoclay. Preferably, the formulation comprises from 1% to 3% nanoclay and, suitably, the nanoclay comprises an organo-modified nanoclay.

In one embodiment, the adhesive formulation is a hot melt adhesive, and comprises 25% to 55% mcl-PHA by weight.

In one embodiment, the hot melt adhesive comprises mcl-PHA as a base material, a tackifier, a wax and optionally a filler (i.e. a clay).

In one embodiment, the hot melt adhesive comprises:

25% to 55% substantially non-crystalline mcl-PHA;
35% to 55% tackifier;
2% to 35% wax; and
optionally an additive selected from one or more of a filler, an antioxidant, a plasticizer, and a detackifier.

In one embodiment, the mcl-PHA has a crystallinity of less than 30%. Preferably, the mcl-PHA has a crystallinity of less than 10%. More preferably, the mcl-PHA has a crystallinity of up to 5%. Most preferably, the mcl-PHA is amorphous.

In one embodiment, the hot melt adhesive comprises:

25% to 40% substantially non-crystalline mcl-PHA;
40% to 50% tackifier;
10% to 30% wax; and
optionally an additive selected from one or more of a filler, an antioxidant, a plasticizer, and a detackifier.

In one embodiment, the hot melt adhesive comprises:

about 28% to about 30% substantially non-crystalline mcl-PHA;

about 42% to about 47% tackifier;
about 15% to about 25% wax; and
optionally an additive selected from one or more of a filler, an antioxidant, a plasticizer, and a detackifier.

In one embodiment, the tackifier is biodegradable. In one embodiment, the wax is biodegradable.
In one embodiment, the hot melt adhesive formulation is substantially free of solvent (i.e. less than 5%, 4%, 3%, 2% or 1% solvent).
In one embodiment, the hot melt adhesive formulation comprises a curing agent. Preferably, the formulation comprises from 0.1% to 5% curing agent. Suitably, the formulation comprises 3% curing agent.
Advantageously, the curing agent comprises benzoyl peroxide.
In one embodiment, the hot melt adhesive formulation comprises a nanoclay. Preferably, the hot melt adhesive formulation comprises from 1% to 3% nanoclay. Suitably, the nanoclay comprises an organo-modified nanoclay.
In a preferred embodiment, the hot-melt adhesive formulation is bio-based and/or biodegradable.
The invention also relates to a hot melt adhesive product formed from a hot melt adhesive formulation of the invention. In one embodiment, the HMA product is in the form of a stick.
The invention also relates to formulations useful in making pressure sensitive adhesive layers (hereafter "pressure sensitive adhesive formulations"). The formulations generally include 10-50% mcl-PHA, and preferably about 10-30% mcl-PHA, and high amounts of solvent. The formulations are dried and cured to form the pressure sensitive adhesive layer, and generally is applied to a substrate prior to drying.
In one embodiment, the adhesive formulation is a pressure sensitive adhesive (PSA) formulation. In one embodiment, the pressure sensitive adhesive formulation comprises solvent, mcl-PHA, a peroxide curing agent, and a co-agent, and optionally a filler.
In one embodiment, the PSA formulation comprises a pressure sensitive adhesive formulation comprising 60-85% solvent, 10-30% substantially non-crystalline mcl-PHA, 0.1-5% peroxide curing agent, and 0.01-1% co-agent, and optionally 0.1 to 3.0% filler (i.e. clay).
In one embodiment, the PSA formulation comprises 70-90% solvent, 10-30% substantially non-crystalline mcl-PHA, 0.1-2% peroxide curing agent, and 0.01-1% co-agent, and optionally 0.1 to 3.0% filler (i.e. clay).
Suitably, the mcl-PHA has a crystallinity of less than 30%. Preferably, the mcl-PHA has a crystallinity of less than 10%. More preferably, the mcl-PHA has a crystallinity of up to 5%. Most preferably, the mcl-PHA is amorphous.
The invention also extends to a pressure sensitive adhesive formulation according to any of Claims 22 to 25 comprising 65-85% solvent, 10-30% substantially non-crystalline mcl-PHA, 0.1-2% peroxide curing agent, and 0.01-1% co-agent, and optionally 0.1 to 3.0% filler (i.e. clay).
In one embodiment, the PSA formulation comprises 78-82% solvent, 16-22% mcl-PHA, 0.3-0.8% peroxide curing agent, and 0.06-0.15% co-agent, and optionally 0.5 to 1.5% filler (i.e. clay).
In another embodiment, the PSA formulation comprises A pressure sensitive adhesive formulation according to any of Claims 22 to 27, and comprising 75-82% solvent, 16-22% substantially non-crystalline mcl-PHA, 0.3-0.8% peroxide curing agent, and 0.06-0.15% co-agent, and optionally 0.5 to 1.5% filler (i.e. clay).
In one embodiment, the peroxide curing agent is selected from benzoyl peroxide, lauroyl peroxide and dicumyl peroxide.
In one embodiment, the co-agent is selected from a multifunctional acrylate and methacrylate ester and dimaleimides. In one embodiment, the multifunctional acrylate is an ethylene glycol dimethacrylate.
In one embodiment, the PSA formulation comprises a nanoclay. Suitably, the formulation comprises from 1% to 3% nanoclay. Preferably, the nanoclay comprises an organo-modified nanoclay.
In a preferred embodiment, the PSA formulation is bio-based and/or biodegradable.
In one embodiment, the solvent is a non-polar solvent such as chloroform or acetone
In one embodiment, the pressure sensitive adhesive formulation is dried and cured to provide a pressure sensitive adhesive layer, the pressure sensitive adhesive layer comprising at least 80% substantially non-crystalline mcl-PHA by weight.
In one embodiment, the pressure sensitive adhesive layer comprises at least 70%, 80% or 90% or 98% substantially non-crystalline mcl-PHA by weight. In one embodiment, the pressure sensitive adhesive layer comprises about 80% to about 90% mcl-PHA. In one embodiment, the pressure sensitive adhesive layer comprises about 82% to about 86% mcl-PHA.
In one embodiment, the pressure sensitive adhesive layer has a thickness of 50-500 $\mu$m, typically 60-400 $\mu$m, and ideally about 60-300 $\mu$m.
The invention also provides a PSA product comprising a PSA layer on a backing substrate. The backing substrate may be a film (i.e. a polymer film such as a PET film), paper, metallic foil or any other suitable substrate, and is generally a planar material. The product may be a film, label, or sticker. The product is generally formed by spreading PSA formulation on the substrate to drying and curing the formulation to provide a PSA layer.

The invention also relates to a method of making a PSA product (of the invention) comprising the steps of

dissolving substantially non-crystalline mcl-PHA in a suitable solvent;
adding the peroxide curing agent and co-agent (and optionally a filler) to the dissolved substantially non-crystalline mcl-PHA with stirring to provide a liquid PSA formulation;
applying a layer of the liquid PSA formulation on to a suitable substrate;
allowing the layer of liquid PSA formulation to dry;
and crosslinking the PSA formulation at elevated temperature for a suitable curing period.

In one embodiment, the PSA formulation is dried for at least 4, 8, 12, 18 or 24 hours. This allows sufficient amount of solvent to evaporate to solidify the PSA while allowing it to function as a hot melt pressure sensitive adhesive.

In one embodiment, the PSA formulation is cured at a temperature of 70-150C, preferably 70-90C, and ideally at about 80C. In one embodiment, the PSA formulation is cured for 1-10 hours, 2-7 hours, and ideally about 3-5 hours. The time and temperature of curing can be varied to vary the properties of the PSA.

Brief Description of the Figures

**Figure 1:** Preparation of AI-HMA/PSA-AI, PET-HMA/PSA-PET and Paper-HMA/PSA-Paper laminates
**Figure 2:** Optical image of L8900-mcl-PHA HMA laminates

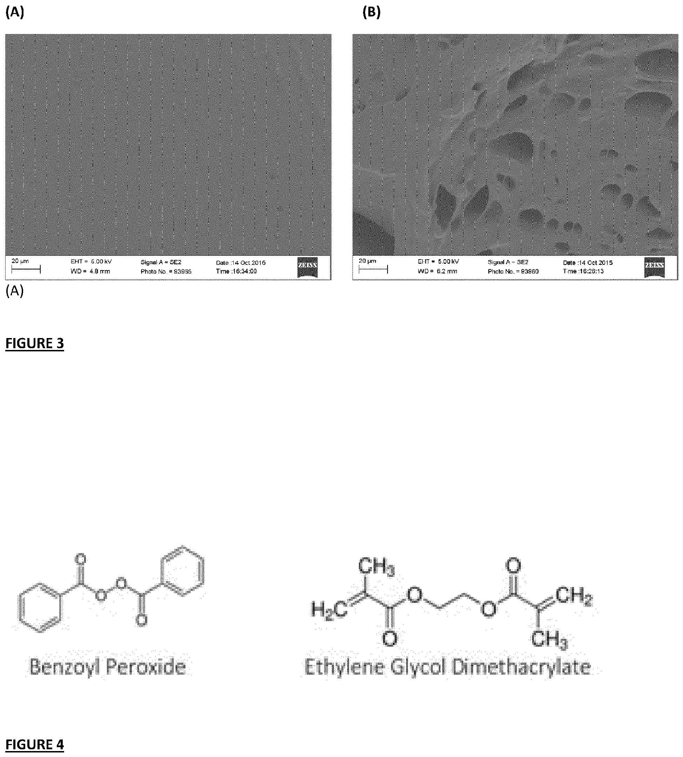

**Figure 3:** SEM images of L8900-mcl-PHA HMA and PSA film: a) surface and b) cross section of PIFL 13.
**Figure 4:** Chemical Structure of peroxide and co-agent used in crosslinking reactions
**Figure 5:** Example of the coated film for label applications
**Figure 6:** Sol-Gel analysis for crosslinked polymer with benzoyl peroxide, Dicumyl peroxide and Lauroyl peroxide
**Figure 7:** a) Experimental set-up for HMA preparation b) paper bag with cellulose film window.
**Figure 8:** Brookfield viscosity determination at different temperatures
**Figure 9:** a) Viscosity measurements for HMA G60-PHA (100% bio-based formulation) (measurement based in ASTM D4499 and ISO 10363 Thermal stability determination) b) thermal behaviour at 160 °C of an EVA-based unstable adhesive

Detailed Description of the Invention

All publications, patents, patent applications and other references mentioned herein are hereby incorporated by reference in their entireties for all purposes as if each individual publication, patent or patent application were specifically and individually indicated to be incorporated by reference and the content thereof recited in full.

Definitions and general preferences

Where used herein and unless specifically indicated otherwise, the following terms are intended to have the following meanings in addition to any broader (or narrower) meanings the terms might enjoy in the art:
Unless otherwise stated or required by the context, all % values provided herein are weight %.

Unless otherwise required by context, the use herein of the singular is to be read to include the plural and *vice versa.* The term "a" or "an" used in relation to an entity is to be read to refer to one or more of that entity. As such, the terms "a" (or "an"), "one or more," and "at least one" are used interchangeably herein.

As used herein, the term "comprise," or variations thereof such as "comprises" or "comprising," are to be read to indicate the inclusion of any recited integer (e.g. a feature, element, characteristic, property, method/process step or limitation) or group of integers (e.g. features, element, characteristics, properties, method/process steps or limitations) but not the exclusion of any other integer or group of integers. Thus, as used herein the term "comprising" is inclusive or open-ended and does not exclude additional, unrecited integers or method/process steps.

As used herein, the term "medium chain length polyhydroxyalkanoates" or "mcl-PHA" refers to linear polyesters having an average monomer chain length of C6 to C14, and which are biodegradable. These polyesters are produced by bacterial fermentation of a suitable substrate, typically sugars or lipids. In preferred embodiments, the mcl-PHA is substantially non-crystalline, and typically has a crystallinity of less than 30% as determined by a method of x-ray diffraction. Typically, the substantially non-crsytalline mcl-PHA has a crystallinity of less than 30% while in preferred embodiments the mcl-PHA has a crystallinity of less than 10%. Ideally, the substantially non-crystalline mcl-PHA has a crystallinity of up to 5%, preferably from about 2 to 5%. In particularly preferred embodiments, the substantially non-crystalline mcl-PHA is amorphous.

Methods of producing mcl-PHA are described in the literature, including Lee et al (Biotechnology and Bioengineering, Vol.68, No. 4, 2000), and Madison et al (Microbiology and Molecular Biology Reviews, March 1999, P21-53) in which mcl-PHA is referred to as msc-PHA and formation by Pseudomonas from fatty acids is described on pages 39 and 40.

As used herein, the term "adhesive" refers to a substance that is applied to a surface and binds the surface to a second surface. Various forms of adhesives are known including pressure sensitive adhesives and hot melt adhesives. Adhesives may be provided in different forms, for example adhesives glue which may be solid or liquid, hot melt adhesive which is generally solid at room temperature and which requires heat for delivery/application, and pressure sensitive adhesive which is also generally solid and tacky. Many adhesives are provided in the form of adhesive films (also known as "self-adhesive films") which are generally produced from adhesive formulations which are hot-pressed/extruded into the form of a film. The adhesives of the invention comprise mcl-PHA, typically in an amount of 5-95%, and are therefore at least partly biodegradable, and in some embodiments comprise at least 10%, 20%, 30%, 40%, 50%, 60%, 70%, 80%, or 98% mcl-PHA (by weight). In some embodiment, the adhesive (i.e. pressure sensitive adhesive or self-adhesive films) are cured, typically with a peroxide curing agent. In some embodiment, the adhesive is a composite adhesive agent and includes mcl-PHA and in addition either a second biodegradable polymer (i.e. polylactic acid) or a non-biodegradable thermoplastic elastomer, for example an acrylate-based thermoplastic elastomer.

As used herein, the term "curing agent" or "crosslinking agent" refers to agents employed to toughen or harden polymers by cross-linking of polymer chains. It is also referred to as a vulcanisation agent. Curing agents are well known to a person skilled in the art of polymer chemistry. Peroxide curing agents are particularly useful for the adhesives of the present invention, and include benzoyl peroxide, dicumyl peroxide, lauryl peroxide, 2,5-Dimethyl-2,5-di(tert-butylperoxy)hexane (DTBPH) and Di(tert-butylperoxyisopropyl)benzene (DTBPIP). Suitable peroxide curing (vulcanisation) agents are described in Section 2.1 of Alvarez-grima et al (PhD Thesis, University of Twente, Enschede, Netherlands, 2007 ISBN: 90-365-2456-3).

As used herein, the term "composite adhesive agent" refers to an adhesive comprising a biodegradable agent such as mcl-PHA and a non-biodegradable thermoplastic elastomer. In one embodiment, the composite adhesive agent comprises 5% to 75% mcl-PHA and 25% to 95% non-biodegradable thermoplastic elastomer, and optionally a curing agent. In one embodiment, the invention provides an adhesive film, especially a self-adhesive film, formed obtainable from a composite adhesive agent of the invention. The film is generally obtainable by hot-pressing/extruding the agent to form the film.

As used herein, the term "biodegradable" as applied to an adhesive or material means that the adhesive or material can be degraded by enzymatic processes resulting from the action of enzymes derived from cells degrading it, for example bacterial or fungal cells. Mcl-PHA is a biodegradable material.

As used herein, the term "bio-based" as applied to an adhesive or material means that the adhesive or material is made from resources originating in renewable resources where the carbon is young relative to fossil based resources.

As used herein, the term "thermoplastic elastomer" refers to a polymer having both thermoplastic and elastomeric properties, and generally elastomeric properties during use and thermoplastic properties during melt. Suitable examples for use in the present invention include acrylate-based thermoplastic elastomers described in Dufour et al (Macromolecular Chemistry & Physics, 209, 1686-1693 (2008)), Dufour et al (Macromolecules, 41, 2451-2458 (2008)), Mosnacek et al (Polymer, 50, 2087-2094 (2009)), Nese et al (Macromolecules, 43, 1227-1235 (2010)), and Juhari et al (Polymer, 21, 4806-4813 (2010)). In one embodiment, the thermoplastic elastomer is selected from poly(ethylene-co-methacrylate-co-glycidylmethacrylate) and poly(ethylene-co-ethacrylate-co-maleicanhydride), or derivates thereof having elastomeric properties during use and thermoplastic properties during melt. In one embodiment, the thermoplastic elastomer is a random terpolymer of ethylene, acrylic ester and glycidyl methacrylate or maleic anhydride.

As used herein, the term "hot-pressing" for forming adhesive film" refers to pressing of the adhesive film under temperature and pressure to produce uniform thickness film.

As used herein, the term "hot melt adhesive" or "HMA" refers to a form of thermoplastic adhesive that is supplied in solid form (generally as a stick) and designed to be melted and applied using a hot glue gun. The adhesive is generally tacky when hot and solidifies in a few seconds to one minute. Hot melt adhesives can also be applied by dipping, coating or spraying. Generally, the HMA comprises mcl-PHA as a base material, a tackifier, a wax and optionally a filler (i.e. a clay). In one embodiment, the tackifier is biodegradable. In one embodiment the wax is biodegradable. In one embodiment, the HMA comprises 25% to 55% mcl-PHA. In one embodiment, the HMA comprises 25% to 40% mcl-PHA. In one embodiment, the HMA comprises 25% to 35% mcl-PHA. In one embodiment, the HMA comprises about 28% to about 30% mcl-PHA. In one embodiment, the HMA comprises 35% to 55% tackifier. In one embodiment, the HMA comprises 40% to 50% tackifier. In one embodiment, the HMA comprises about 42% to about 47% mcl-PHA. In one embodiment, the HMA comprises 2% to 35% wax. In one embodiment, the HMA comprises 10% to 30% wax. In one embodiment, the HMA comprises 15% to 25% wax. In one embodiment, the HMA comprises about 18% to about 22% wax. In one embodiment, the wax is selected from Bees wax, Carnauba wax, and Paraffin wax. In one embodiment, the wax includes a biodegradable wax (i.e. Carnauba wax) and optionally a non-biodegradable wax (i.e. Parafin wax). The HMA may also include one or more addition additives selected from an anti-oxidant, a detackifier, and a plasticizer.

As used herein, the term "wax" refers to a class of organic compounds that are hydrophobic, malleable solids at or near ambient temperature, that are insoluble in water and soluble in organic non-polar solvents, and that generally comprise higher alkanes and lipids with melting points above 40C. The wax may be a biodegradable wax, for example an animal wax or a plant wax, or a modified version of a plant or animal wax, or a petroleum derived wax. Examples of plant and animal waxes include beeswax, spermaceti, lanolin, carnauba wax, candelila wax and ouricury wax. Examples of petroleum derived waxes include paraffin wax. Paraffin waxes are mixtures of saturated n- and ios- alkanes, naphthenes, and alkyl- and naphthene-substituted aromatic compounds. In one embodiment, the paraffin wax is a low viscosity paraffin wax.

As used herein the term "tackifier" refers to chemical compounds used in formulating adhesives to increase the tack (the stickiness of the surface of the adhesive). They are described in Tse et al (Journal of Adhesion Science and Technology. 3(1): 551-570). In one embodiment, the tackifier is a resin, for example rosins and their derivatives (for example a hydrogenated rosin), terpenes and modified terpenes, aliphatic, cycloaliphatic and aromatic resins, hydrogenated hydrocarbon resins and their mixtures, and terpene phenol resins. In one embodiment, a combination of tackifiers is employed in the HMA. In one embodiment, the tackifier or tackifiers have a softening point greater than 60°C. In one embodiment the tackifier is biodegradable. Examples include esters of hydrogenated rosins (i.e. Foral 85) and polytherpene resin (i.e. Piccolyte F105).

As used herein, the term "filler" refers to a material that adds bulk to the HMA and improves cohesive strength. Examples includes clays such as kaolin, calcium carbonate, barium sulphate, talc, silica, carbon black.

As used herein, the term "plasticizer" refers to an additive used in HMA's that increase the plasticity or viscosity of the HMA. Examples include oils including animal, plant or petroleum based oils, benzoates such as 1-4-cyclohexane dimethanol, phthalates, and chlorinated paraffins. Examples of biodegradable plasticizers include plant and animal oils and acetyl tributyl citrate.

As used herein, the term "pressure sensitive adhesive" refers to an adhesive which forms a bond to a substrate when pressure is applied to marry the adhesive to the substrate. It is used in pressure sensitive tapes, labels, glue dots, note pads, automobile trim and many other products. The invention provides pressure sensitive adhesive formulations, cured pressure sensitive adhesive, and pressure sensitive adhesive products comprising cured pressure sensitive adhesive applied to a substrate such as a film. The formulation comprises mcl-PHA, a peroxide curing agent, optionally a co-agent and in one embodiment a filler. The mcl-PHA is generally dissolved in a suitable solvent (i.e. chloroform) before the curing agent and optional co-agent and filler are added, and the formulation is then generally applied as a film to a substrate, dried and then heat cured.

As used herein "peroxide curing agent" refers to a peroxide compound suitable for vulcanisation of polymers. Peroxide curing agents are well known in the art, and include benzoyl peroxide, dicumyl peroxide, lauryl peroxide, 2,5-Dimethyl-2,5-di(tert-butylperoxy)hexane (DTBPH) and Di(tert-butylperoxyisopropyl)benzene (DTBPIP). Suitable peroxide curing (vulcanisation) agents are described in Section 2.1 of Alvarez-grima et al (PhD Thesis, University of Twente, Enschede, Netherlands, 2007 ISBN: 90-365-2456-3).

As used herein, the term "co-agent" refers to a multifunctional organic compound that is highly reactive towards free-radicals. They are used as reactive additives to boost peroxide vulcanisation efficiency. Generally, the co-agent comprises a molecule with (meth)acrylate groups, maleimide groups, or allylic groups, although polymeric materials with a high vinyl content (i.e. 1, 2-polybutadiene) can also act as a co-agent. In one embodiment, the co-agent is a so-called Type I co-agent, which are substantially polar molecules with a low molecular weight and activated double bonds. Examples include maleimide and (meth)acrylate based co-agents, and specific examples include ethylene glycol dimethacrylate (EDMA), N,N-m-phenylenedimaleimide (BMI-MP), and Trimethylolpropane trimethacrylate (TMPTM). Suitable co-agents are described in Section 2.2 of Alvarez-grima et al (PhD Thesis, University of Twente, Enschede, Netherlands, 2007 ISBN: 90-365-2456-3).

Exemplification

The invention will now be described with reference to specific Examples. These are merely exemplary and for illustrative purposes only: they are not intended to be limiting in any way to the scope of the monopoly claimed or to the invention described. These examples constitute the best mode currently contemplated for practicing the invention.

**A. Pressure Sensitive and Hot Melt Adhesives based on Bioplastech mcl-PHA:**

**PSA Formulations and Results**

The PSA is prepared by a crosslinking reaction of mcl-PHA (O) and di functional acrylic comonomer (co-agent) using a peroxide as free radical initiator for crosslinking. The chemical structures of the peroxide (benzoyl peroxide) and the difunctional co-agent (ethylene glycol dimethacrylate) are shown in 4. Various other peroxides such as lauroyl peroxide and dicumyl peroxide were also evaluated as free radical initiators for cross linking the mcl-PHA.

## Preparation and Evaluation

In a typical process scheme, films are prepared as follows:

i) 100 g of mcl-PHA 'PHAO' was dissolved in 100ml of chloroform.

ii) To this solution 3 g of benzoyl peroxide and 0.75 g of ethylene glycol dimethacrylate was added at room temperature over a 30 min duration under stirring, until a viscous and transparent homogeneous solution was obtained

iii) To create PSA tapes or labels, the solution was spread on the desired substrate (such as PET or cellulose based films) using an automatic film coater with a precision knife with a controlled thickness.

iv) After the coating, the film is allowed to dry for at least 24h in a fume hood.

v) The coated film is then placed in vacuum oven where crosslinking reaction takes place at 85°C during 4 hours

The resultant PSA adhesive thickness is in the range of 80-300$\mu$m. 5 shows the dried PSA films on cellulose substrate.

In order to improve the peel strength of PSA films, solutions were also prepared with 1 wt% synthetic nanoclay Somasif MAE. For selected compositions a desired amount of nanoclay was dispersed in chloroform and added to mcl-PHA solution in chloroform [step (i)]. To evaluate the best crosslinking initiator and the extent of cross linking reaction, the amount of gel content was measured in the final films, produced using either benzoyl peroxide, lauroyl peroxide or dicumyl peroxide. Mechanical properties were also tested. For these evaluations, material was prepared as described above in steps i) and ii), and the solution then pipetted into a Petri dish. The solvent was allowed to evaporate over approximate two days. The polymer films obtained, typically 5mm thick, were allowed to crosslink in a vacuum oven according to time and temperatures mentioned in 1.

| Peroxide type | Temperature (°C) | time (hr) |
|---|---|---|
| Lauroyl peroxide | 80 | 6 |
| Benzoyl peroxide | 80 | 4 |
| Dicumyl peroxide | 145 | 2.5 |

### Table 1 Cure temperatures and times used for each peroxide

To measure the gel content, a sample of a film is weighed and placed in a round-bottomed flask containing approximately 5-10ml of chloroform. The film is allowed to sit in the solvent for 2h at room temperature and is agitated periodically. After 2hr the film is retrieved by filtering it off chloroform solution and the gel is placed in a glass dish and allowed to dry for 1-3 days until the weight remains constant.

The percentage of solids (%sol) is calculated from Equation 1. Films prepared with Benzoyl peroxide has shown highest % solids which indicate maximum extent of crosslinking compared to other two initiators.

$$\%Sol = \frac{Sol}{sol+gel} \times 100. \qquad \text{(Eq. 1)}$$

Sol = non-crosslinked sample weight fraction after solvent extraction
Gel = crosslinked sample weight fraction after solvent extraction

*Mechanical properties*

The mechanical properties of crosslinked and nanocomposites PSA films prepared using benzoyl peroxide as crosslinking agent are shown in Table 2.

With increase in benzoyl peroxide content from 1.5 wt% to 4 wt%, tensile strength increases by 255% (from 0.1MPa to 0.38MPa), Young's modulus increases by 161% (0.07 to 0.19MPa).

With addition of 1wt% nanoclay to the sample with 3wt% benzyl peroxide, tensile strength of the films was further improved by 68%.

*Table 2 Mechanical properties of crosslinked films*

| Sample | wt(%)crosslinking agent | E (MPa) | UTS (MPa) | % Strain | Toughness |
|---|---|---|---|---|---|
| Bioplastech O mcl-PHA benzoyl pereoxide | 1.5 | 0.074 | 0.107 | 519 | 0.264 |
| | 2.0 | 0.065 | 0.228 | 287 | 0.398 |
| | 2.5 | 0.099 | 0.233 | 169 | 0.260 |
| | 3 | 0.108 | 0.257 | 312 | 0.420 |
| | 4.0 | 0.193 | 0.380 | 254 | 0.670 |
| Bioplastech O mcl-PHA, benzoyl peroxide and 1% | 1.5 | 0.0245 | 0.06675 | 238 | 0.0984 |
| | 2.0 | 0.050 | 0.229 | 419 | 0.537 |
| nanoclay content Somasif MAE | 3.0 | 0.117 | 0.435 | 468 | 1.060 |

*Peel Test and sol-gel analysis*

Peel adhesion test of the PSA films was performed based in ASTM 3330 (Peel Adhesion of Pressure-Sensitive Tape) using the mcl-PHA crosslinked films with various concentrations of benzoyl peroxide. Peel tests were performed using the coated flexible PET (labels) substrate at 180° angle to the pristine samples without nanoclay. The peel strength of the PSA formulations is presented in Table 3.

*Table 3: Peel test and Sol-gel analysis results for crosslinked polymer with Benzoyl peroxide*

| % crosslinking agent (Benzoyl Peroxide) | Peel test (N) (ASTM 3330) | %GEL |
|---|---|---|
| 0.5 | - | 0 |
| 1 | 1.03 | 87.62 |
| 1.5 | 0.57 | 89.13 |
| 2 | 0.455 | 92.75 |
| 2.5 | 0.69 | 96.44 |
| 3 | 0.8 | 94 |

Although films with 1 wt% crosslinking agent have higher peel strength, the material integrity and the film uniformity were poor compared to films prepared with 3% crosslinking agent. For all further optimisation PSA films were prepared with 3 wt% benzoyl peroxide.

*Shear test at low temperatures*

Shear test under low temperature was performed to demonstrate performance at for low temperature environments. EN 1943 (Self Adhesive Tapes - Measurement of Static Shear Adhesion) procedure G (test conducted at elevated temperature) was adapted. This test aims to determine the ability of a PSA to remain adhered under a constant load applied parallel to the surface of the tape and substrate.

Measurements were carried out -16.5°C, -4.0°C and 18°C (ambient) temperature. The test mass employed in this test was 1000g, and the results are shown in Table 4. The films coated with the developed PSA were polyethylene terephthalate (PET) and cellulose films, two different substrates (panels) were tested; a stainless steel (SS) panel and a PET panel. The results show that the performance are highly dependent on choice of substrate and adhered material, in all cases the coated film exhibited bonding abilities at low temperatures moreover for the films against PET substrate which showed to perform significantly better at the lowest temperature. This is desirable result since PET substrate is more likely to be used in the envisioned application.

*Table 4:* Shear adhesion results for PET and cellulose coated films over SS and PET substrate panels using a test mass of 1000g.

| sample | 18°C | -4°C | -16.5°C |
|---|---|---|---|
| | SS panel (hr) | | |
| PET coated | 0.2 | 0.15 | 0.03 |
| Cellulose coated | 0.2 | 0.17 | 0.06 |
| | PET pan el (hr) | | |
| PET coated | 0.02 | 0.07 | 66.3 |
| Cellulose coated | 0.37 | 0.2 | 55.1 |

## HMA formulations and results

mcl-PHA was combined with biodegradable and non-biodegradable wax, and with other additives such as tackifiers, nanoclays and surfactants to formulate an HMA. Some compositions are biodegradable and other compositions are not 100% biodegradable; all of them are either fully or partially bio-based. The tackifying resins were selected from a group of natural and modified rosins.

### *Preparation and Evaluation*

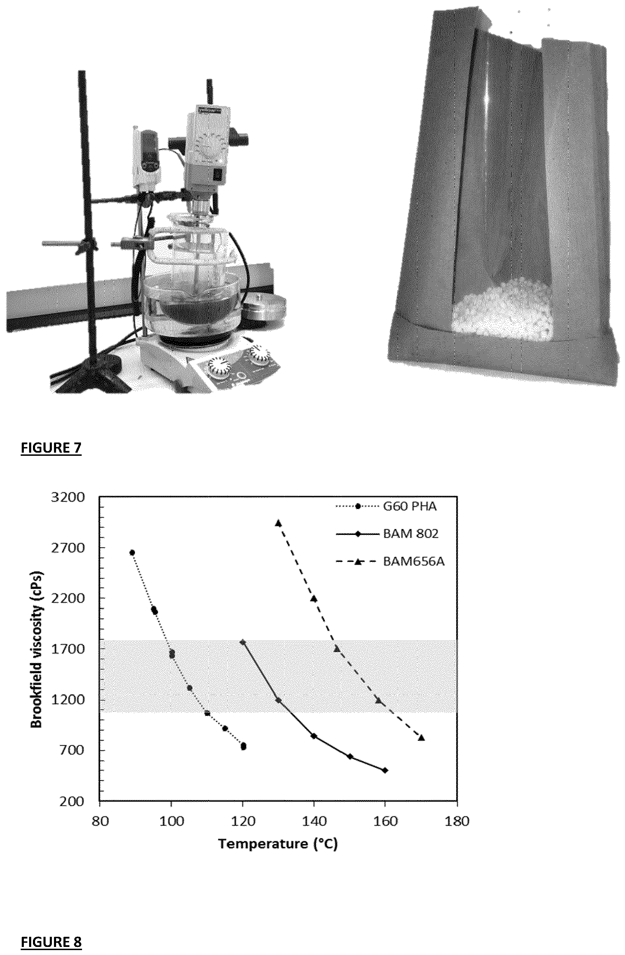

Hot melt adhesives were prepared using Bioplastech mcl-PHA (PHA12 or O). The schematic of experimental set-up is shown in Figure 7 (a). In a typical process scheme:

i) A 250ml reactor was preheated to 130°C, with an overhead stirrer equipped with a stirring paddle.

ii) The reactor was charged with 50% of the tackifying resins, 50% of the wax with antioxidant Irganox 1010

iii) After melting of the resins and wax, nanoclay was added into melt with continuous stirring until homogeneous melt obtained

iv) The remainder of the tackifier resins and wax was admixed therewith at 130°C

v) The temperature of the melt was reduced to 100°C and mcl-PHA was added slowly over 10 min followed by all the surfactant addition and the stirring was continued for 30min

vi) Finally the mixture was poured into coated glass cups and cooled to room temperature. The resultant adhesive is solid block.

Two different formulations, only differing in the type of wax contained, were selected for evaluation against a commercial sample the formulations are presented in Table 5. The resultant adhesive was used to assemble various disposable containers such as boxes and shopping bags. Figure 7(b) shows the compostable paper bag made up crafting paper and cellulose film window.

The optimal composition identified as an HMA contains (weight fractions):
- 29% Bioplastech mcl-PHA O,
- 46% a combination of tackifiers having a softening point greater than 60°C,
- 20% wax diluent,
- 3% organo-modified Nanoclay (cloisite 30B),
- 1% an antioxidant (IRGANOX 1010)
- 1% by weight a non-ionic Surfactant (TRITON 100).

| Blend ID | mcl-PHA | | Composition (%) | | | | | | | | additives | | | |
| | mcl-PHA tyoe | mcl-PHA (%) | WAX | | | | Tackifier | | | | | | | |
| | | | Paraffin wax | Paraffin wax (low viscosity) | Carnauba wax | Bees wax | F85E | HM 106 | F105 | Antioxidant | soybean oil | clay | Detackifier |
|---|---|---|---|---|---|---|---|---|---|---|---|---|---|
| G26 | PHA-M | 35 | | | | 28 | 35 | | | 1 | | 1 | |
| G27 | PHA-M | 35 | | | | 28 | 35 | | | 1 | | 1 | |
| G41 | PHA-M | 36 | | | | 24 | 36 | | | 1 | 3 | 1 | |
| G43 | PHA-M | 49 | | | | 23 | 23 | 23 | | 1 | 3 | 1 | |
| G44 | PHA-M | 40 | | | | 19 | 19 | 19 | 19 | 1 | 2 | 1 | |
| G45 | PHA-M | 50 | | | | 23 | 23 | | 23 | 1 | 2 | 1 | |
| G46 | PHA-M | 49 | | | | 24 | 23 | | 23 | 1 | 1 | 1 | 1 |
| G47 | PHA-M | 47 | | | | 23 | 23 | | 23 | 1 | 1 | 1 | 3 |
| G46-3 | PHA-O | 50 | | | | 24 | 24 | | 24 | 1 | 1 | 1 | 1 |
| G48 | PHA-O | 48 | | | | 2 | 24 | | 24 | 1 | 1 | 1 | 1 |
| G49 | PHA-O | 45 | | | | 5 | 24 | | 24 | 1 | 1 | 1 | 1 |
| G50 | PHA-O | 40 | | | | 10 | 24 | | 24 | 1 | 1 | 1 | 1 |
| G51 | PHA-O | 50 | | | | | 24 | | 24 | 1 | | 1 | 1 |
| G52 | PHA-O | 41 | | | 10 | | 23 | | 23 | 1 | | 1 | 1 |
| G53 | PHA-O | 35 | | | 15 | | 24 | | 23 | 1 | 0.5 | 2 | |
| G54 | PHA-O | 34 | | | 15 | | 24 | | 24 | 1 | | 1 | 1 |
| G55 | PHA-O | 35 | | | 15 | | 23 | | 23 | 1 | | 3 | 1 |
| G56 | PHA-O | 35 | | | 15 | | 22 | | 23 | 1 | | 3 | 1 |
| G57 | PHA-O | 35 | | | 15 | | 22 | | 23 | 2 | | 3 | |
| G58 | PHA-O | 34 | | | 15 | | 22 | | 22 | 1 | 1 | 3 | 1 |

| G59 | PHA-O | 35 |    |    | 15 | 22 | 23 | 1   |  | 3 | 2 |
| --- | ----- | -- | -- | -- | -- | -- | -- | --- | -- | - | - |
| G60 | PHA-O | 30 |    | 20 |    | 23 | 23 | 0.6 |  | 3 |   |
| G61 | PHA-O | 35 |    |    | 15 | 22 | 22 | 0.6 |  | 3 | 2 |
| G62 | PHA-O | 30 |    | 20 |    | 23 | 23 | 1   |  | 3 | 1 |
| G63 | PHA-O | 30 | 20 |    |    | 23 | 23 | 1   |  | 3 | 1 |
| G64 | PHA-O | 29 | 20 |    |    | 22 | 23 | 1   |  | 3 | 2 |

*Table 5: Hot melt adhesive compositions based in mcl PHA*

*Table 6: Selected HMA film, peel strength performance*

|     | Polymer | Bio-based content | Peel Strength (N) |
| --- | ------- | ----------------- | ----------------- |
| G46 | M       | 97                | 8.45              |
| G60 | PHA-O   | 100               | 5.54              |
| G64 | PHA-O   | 80                | 8.44              |

*Table 7: Formulation of developed HMA for packaging application*

|                                   | **G60 PHA** (100% Biobased) | **G64 PHA** (80% Biobased) |
| --------------------------------- | --------------------------- | -------------------------- |
| **mcl-PHA (O)**                   | 29                          | 29                         |
| **Tackifier 1: FORAL 85 E**       | 23                          | 23                         |
| **Tackifier 2: PICCOLYTE F105**   | 23                          | 23                         |
| **Carnauba wax ( Bio based)**     | 20                          | -                          |
| **Paraffinic wax ( Petro based)** | -                           | 20                         |
| **Antioxidant IRGANOX 1010**      | 1                           | 1                          |
| **Nanoclay Cloisite 30B**         | 3                           | 3                          |
| **TRITON100 non-ionic surfactant**| 1                           | 1                          |

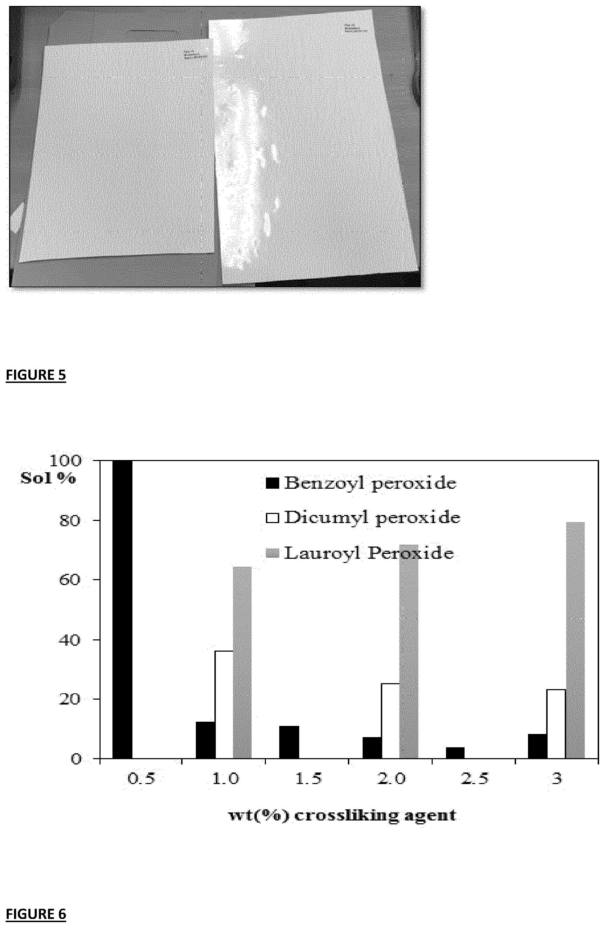

In order to determine the operation window for the mcl-PHA based HMA, the viscosity of the HMA was measured at various temperatures using a Brookfield viscometer DV-II (Spindle CS4) with a Thermosel control system to accurately measure the melt viscosity at elevated temperatures. Two commercially available adhesives were compared with our selected formulation G60 (Figure 6).

- BAM356A (general packaging, application temperature 150-170°)

- BAM802 (labels, application temperature 120-140°C)

The recommended application temperatures correspond to a viscosity between 830-1600cP, from which we infer that the application temperature for the G60 mcl-PHA adhesive should be between 100 and 120°C.

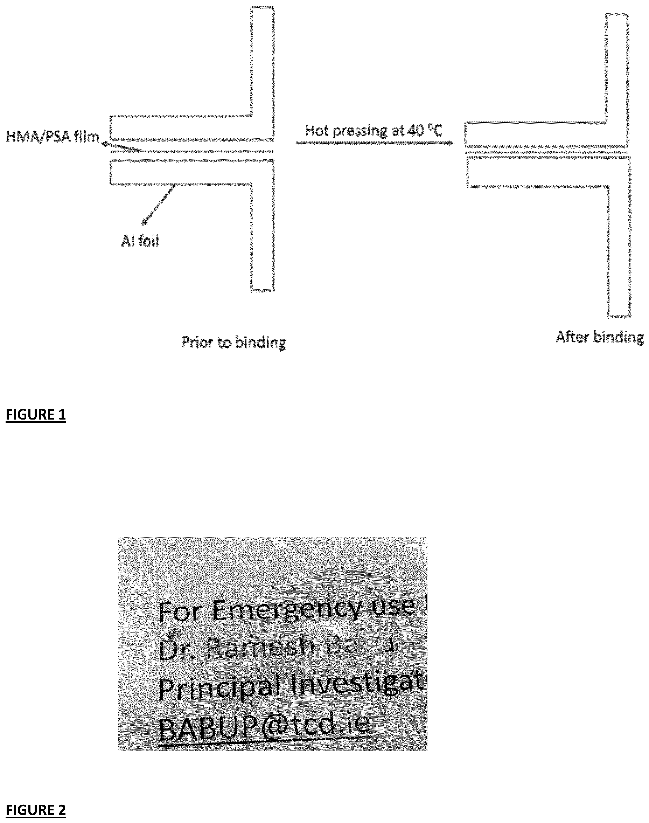

Hot melt adhesives need to be stable both during storage and processing as well as during application. In particular thermal stability of hot-melt adhesives is of major importance. An increase of viscosity over time at the application temperature would create problems for the end user, leading to (for example) unscheduled interruptions in production because of plugged transfer lines and applicators. An example of an unstable adhesive behaviour is shown in Figure 2(b) published by Adhesive manufacturers.

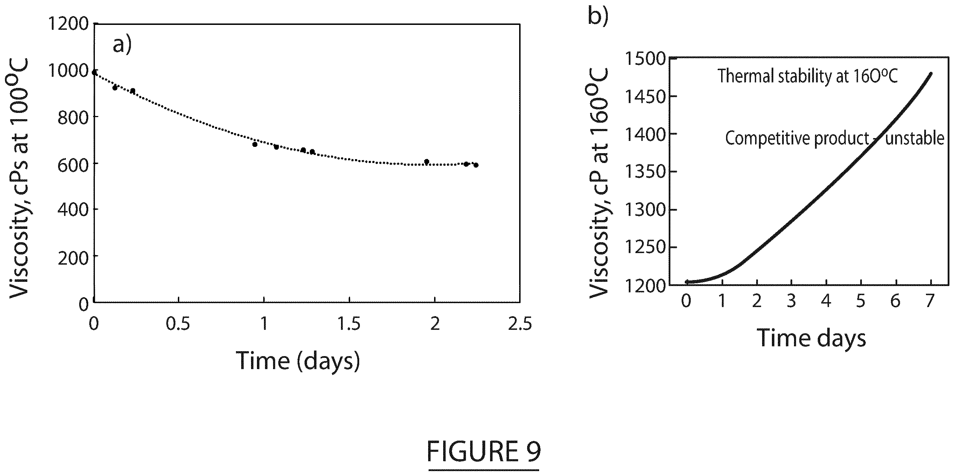

Figure 9(a) shows the melt viscosity of the G60 developed formulation at 100°C as a function of time. Decrease of melt viscosity indicates thermal degradation of the adhesive. For the developed adhesive the melt viscosity tends to decrease and then stabilises after 1.5 days. The thermal stability of the formulation is however expected to be lower than petroleum-based adhesives.

Peel strength is an important parameter which determines the adhesive strength between the two surfaces which determines the suitability adhesive for given application. In order to evaluate the peel strength of the adhesives developed, a laminating film of two PET strips was obtained by placing the adhesive between the PET films using hydraulic press at 130°C.

The peel test was carried out as per ASTM D3330 ISO8510, and ISO11339. These results are compared with two commercial available adhesives EVA based BAM802 for label applications, and BAM 356A for packaging applications. The formulations prepared with mcl-PHA show better peel strength compared to commercial HMA.

| ADHESIVE type | PEEL Strength (N) |
|---|---|
| G60PHA- 100 Biobased | 6.68 (SD 1.7) |
| G64PHA- 80 Biobased | 7.95 (SD 0.5) |
| BAM 802 | 3.93 |
| BAM 356A | 7.29 |

*Table 8 HMA Peel test results, G60PHA and G64PHA results show average of five different batches*

## Claims

1. A pressure sensitive adhesive formulation comprising 60-85% solvent, 10-30% substantially non-crystalline mcl-PHA, 0.1-5% peroxide curing agent, and 0.01-1% co-agent, and optionally 0.1 to 3.0% filler (i.e. clay).

2. A pressure sensitive adhesive formulation according to Claim 1 wherein the mcl-PHA has a crystallinity of less than 30%.

3. A pressure sensitive adhesive formulation according to Claim 2 wherein the mcl-PHA has a crystallinity of less than 10%, optionally of up to 5%

4. A pressure sensitive adhesive formulation according to any of Claims 1 to 3 wherein the mcl-PHA is amorphous.

5. A pressure sensitive adhesive formulation according to any of Claims 1 to 4 comprising 65-85% solvent, 10-30% substantially non-crystalline mcl-PHA, 0.1-2% peroxide curing agent, and 0.01-1% co-agent, and optionally 0.1 to 3.0% filler (i.e. clay).

6. A pressure sensitive adhesive formulation according to any of Claims 1 to 5, and comprising 75-82% solvent, 16-22% substantially non-crystalline mcl-PHA, 0.3-0.8% peroxide curing agent, and 0.06-0.15% co-agent, and optionally 0.5 to 1.5% filler (i.e. clay).

7. A pressure sensitive adhesive formulation according to any of Claims 1 to 6, in which the peroxide curing agent is selected from benzoyl peroxide, lauroyl peroxide and dicumyl peroxide.

8. A pressure sensitive adhesive formulation according to any of Claims 1 to 7, in which the co-agent is selected from a multifunctional acrylate and methacrylate ester and dimaleimides.

9.  A pressure sensitive adhesive formulation according to any of Claims 1 to 8 wherein the formulation comprises a nanoclay.

10. A pressure sensitive adhesive formulation according to Claim 9 wherein the formulation comprises from 1% to 3% nanoclay.

11. A pressure sensitive adhesive formulation according to Claim 10 wherein the nanoclay comprises an organo-modified nanoclay.

12. A pressure sensitive adhesive formulation according to any of Claims 1 to 11 that is bio-based and/or biodegradable.

13. A pressure sensitive adhesive layer formed by drying and curing the pressure sensitive adhesive formulation of any of Claims 1 to 12, the pressure sensitive adhesive layer comprising at least 80% substantially non-crystalline mcl-PHA by weight

14. A pressure sensitive adhesive product comprising a pressure sensitive adhesive layer of Claim 12 on a backing substrate.

15. A method of making a pressure sensitive adhesive (PSA) product comprising the steps of:

    dissolving substantially non-crystalline mcl-PHA in a suitable solvent;
    adding a peroxide curing agent and co-agent (and optionally a filler) to the dissolved substantially non-crystalline mcl-PHA with stirring to provide a liquid PSA formulation;
    applying a layer of the liquid PSA formulation on to a suitable substrate;
    allowing the layer of liquid PSA formulation to dry;
    and crosslinking the PSA formulation at elevated temperature for a suitable curing period.

16. A method according to Claim 15, in which the pressure sensitive adhesive formulation is dried for at least 12 hours and/or cured at a temperature of 70-150°C for 1-10 hours.

HMA/PSA film

Al foil

Hot pressing at 40 °C

Prior to binding

After binding

**FIGURE 1**

For Emergency use
Dr. Ramesh Ba
Principal Investigat
BABUP@tcd.ie

**FIGURE 2**

(A)

(B)

(A)

**FIGURE 3**

Benzoyl Peroxide

Ethylene Glycol Dimethacrylate

**FIGURE 4**

**FIGURE 5**

**FIGURE 6**

**FIGURE 7**

**FIGURE 8**

FIGURE 9

EP 4 141 060 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GAGNON K D ET AL: "Chemical modification of bacterial elastomers: 1. Peroxide crosslinking", POLYMER, ELSEVIER SCIENCE PUBLISHERS B.V, GB, vol. 35, no. 20, 1 September 1994 (1994-09-01), pages 4358-4367, XP024115720, ISSN: 0032-3861, DOI: 10.1016/0032-3861(94)90093-0 [retrieved on 1994-09-01] | 1-8, 12-16 | INV. C08K3/34 C08K5/10 C08K5/14 C08K9/04 C09J167/04 C08K3/013 ADD. C09J7/35 C09J7/38 |
| A | * page 4358, right-hand column, line 16 – page 4360, left-hand column, line 15; figures 3, 5b, 11, 13; example Sample 2 with 1.0 wt% benzoyl and EGDM; tables 1, 2 * | 9-11 | |
| Y | RICHARD VENDAMME ET AL: "Recent synthetic approaches and emerging bio-inspired strategies for the development of sustainable pressure-sensitive adhesives derived from renewable building blocks : ARTICLE", JOURNAL OF APPLIED POLYMER SCIENCE, vol. 131, no. 17, 5 September 2014 (2014-09-05), pages n/a-n/a, XP055598260, US ISSN: 0021-8995, DOI: 10.1002/app.40669 | 1-8, 12-16 | |
| A | * page 12, left-hand column, line 23 – page 12, left-hand column, line 34 * | 9-11 | |
| A | WO 2004/076583 A1 (METABOLIX INC [US]; WHITEHOUSE ROBERT S [US]) 10 September 2004 (2004-09-10) * page 12, line 18 – page 12, line 28; example 10 * | 1-16 | |

TECHNICAL FIELDS
SEARCHED       (IPC)

C09J
C08J
C08K

-/--

The present search report has been drawn up for all claims

| Place of search | Date of completion of the search | Examiner |
|---|---|---|
| The Hague | 20 January 2023 | Enescu, Cristina |

EPO FORM 1503 03.82 (P04C01)

Europäisches
Patentamt

European
Patent Office

Office européen
des brevets

## EUROPEAN SEARCH REPORT

**Application Number**

**EP 22 19 3551**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 96/05264 A1 (MINNESOTA MINING & MFG [US]) 22 February 1996 (1996-02-22) <br> * page 12, line 9 - page 28, line 25; examples 5, 34; tables 1, 2 * <br> ----- | 1-16 | |

**TECHNICAL FIELDS SEARCHED (IPC)**

The present search report has been drawn up for all claims

| Place of search | Date of completion of the search | Examiner |
|---|---|---|
| The Hague | 20 January 2023 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 3551

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2023

| Patent document cited in search report | | Publication date | Patent family member(s) | | Publication date |
|---|---|---|---|---|---|
| WO 2004076583 | A1 | 10-09-2004 | AT | 377060 T | 15-11-2007 |
| | | | AT | 518932 T | 15-08-2011 |
| | | | DE | 602004009764 T2 | 28-08-2008 |
| | | | EP | 1601737 A1 | 07-12-2005 |
| | | | EP | 1603987 A1 | 14-12-2005 |
| | | | EP | 1935945 A1 | 25-06-2008 |
| | | | EP | 2241605 A2 | 20-10-2010 |
| | | | ES | 2297385 T3 | 01-05-2008 |
| | | | ES | 2371069 T3 | 27-12-2011 |
| | | | HK | 1084687 A1 | 04-08-2006 |
| | | | HK | 1085504 A1 | 25-08-2006 |
| | | | JP | 4724111 B2 | 13-07-2011 |
| | | | JP | 5079321 B2 | 21-11-2012 |
| | | | JP | 5606966 B2 | 15-10-2014 |
| | | | JP | 2006518799 A | 17-08-2006 |
| | | | JP | 2006519293 A | 24-08-2006 |
| | | | JP | 2011140656 A | 21-07-2011 |
| | | | PT | 1603987 E | 10-11-2011 |
| | | | US | 2010305280 A1 | 02-12-2010 |
| | | | WO | 2004076582 A1 | 10-09-2004 |
| | | | WO | 2004076583 A1 | 10-09-2004 |
| WO 9605264 | A1 | 22-02-1996 | AU | 700073 B2 | 17-12-1998 |
| | | | BR | 9508583 A | 14-07-1998 |
| | | | CA | 2195787 A1 | 22-02-1996 |
| | | | DE | 69515044 T2 | 08-06-2000 |
| | | | EP | 0775178 A1 | 28-05-1997 |
| | | | ES | 2141953 T3 | 01-04-2000 |
| | | | JP | H10504057 A | 14-04-1998 |
| | | | US | 5614576 A | 25-03-1997 |
| | | | US | 5753364 A | 19-05-1998 |
| | | | WO | 9605264 A1 | 22-02-1996 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEE et al.** *Biotechnology and Bioengineering,* 2000, vol. 68 (4
- **MADISON et al.** *Microbiology and Molecular Biology Reviews,* March 1999, 21-53
- **ALVAREZ-GRIMA et al.** PhD Thesis. University of Twente, 2007
- **DUFOUR et al.** *Macromolecular Chemistry & Physics,* 2008, vol. 209, 1686-1693
- **DUFOUR et al.** *Macromolecules,* 2008, vol. 41, 2451-2458
- **MOSNACEK et al.** *Polymer,* 2009, vol. 50, 2087-2094
- **NESE et al.** *Macromolecules,* 2010, vol. 43, 1227-1235
- **JUHARI et al.** *Polymer,* 2010, vol. 21, 4806-4813
- **TSE et al.** *Journal of Adhesion Science and Technology.,* vol. 3 (1), 551-570